# EUROPEAN PATENT APPLICATION

(11) **EP 1 724 948 A1**
(43) Date of publication of application: **22.11.2006**
(21) Application number: 05721623.6
(22) Date of filing: 28.03.2005
(51) Int. Cl.: H04B 7/26, H04J 11/00

(54) **BASE STATION APPARATUS, MOBILE STATION APPARATUS, AND DATA CHANNEL SCHEDULING METHOD**

(30) Priority: 30.03.2004 JP 2004099320
(71) Applicant: MATSUSHITA ELECTRIC INDUSTRIAL CO., LTD., Kadoma-shi, Osaka 571-8501 (JP)
(72) Inventor: NISHIO, Akihiko., Matsushita El.Ind.CO.Ltd.IP, Osaka 540-6319 (JP)
(74) Representative: Grünecker, Kinkeldey, Stockmair & Schwanhäusser Anwaltssozietät
(86) International application number: PCT/JP2005/005697
(87) International publication number: WO 2005/096522

(57) **Abstract**

A scheduling method capable of suppressing, in a multicarrier transmission for which a data channel is scheduled, interferences with adjacent cells to suppress reduction of the line capacity, while preventing reduction of the throughput. This method selects a mobile station, to which the data channel is to be assigned, based on the line quality of the control channel for each of OFDM symbols in the time axis direction, while assigning, based on the line quality of the data channel, the data channel of each mobile station for each of the subcarriers in the frequency axis direction. That is, the method performs, based on the line quality of the control channel, the data channel scheduling in the time axis direction, while performing, based on the line quality of the data channel, the data channel scheduling in the frequency axis direction.

## Description

### Technical Field

The present invention relates to a base station apparatus, mobile station apparatus, and data channel scheduling method, and relates to a base station apparatus and data channel scheduling method whereby the data channel of each mobile station is assigned to a plurality of subcarriers by means of OFDM (Orthogonal Frequency Division Multiplexing), for example.

### Background Art

"Beyond 3G systems" have been studied as systems that meet the demands of high-speed packet transmission. Beyond 3G systems currently being studied include multicarrier transmission systems such as OFDM and MC-CDMA. Also, in multicarrier transmission, frequency scheduling, whereby data channel scheduling is performed on a subcarrier-by-subcarrier basis, has been investigated. With frequency scheduling, frequency utilization efficiency is improved by assigning packet data for each mobile station to a subcarrier for which the channel quality is good. To be more specific, frequency scheduling is performed as described below.

Each mobile station reports a CQI (Channel Quality Indicator), which is per-subcarrier channel quality information, to a base station for all subcarriers. In accordance with the CQIs from each mobile station, the base station determines a subcarrier and MCS (Modulation and Coding Scheme) used by each mobile station in accordance with a predetermined scheduling algorithm. When a base station simultaneously transmits data to a plurality of mobile stations, the base station performs frequency scheduling using the CQIs of all subcarriers from all mobile stations (see Patent Document 1, for example). Thus, in frequency scheduling, a mobile station is selected for which packet data transmission is performed on a subcarrier-by-subcarrier basis.

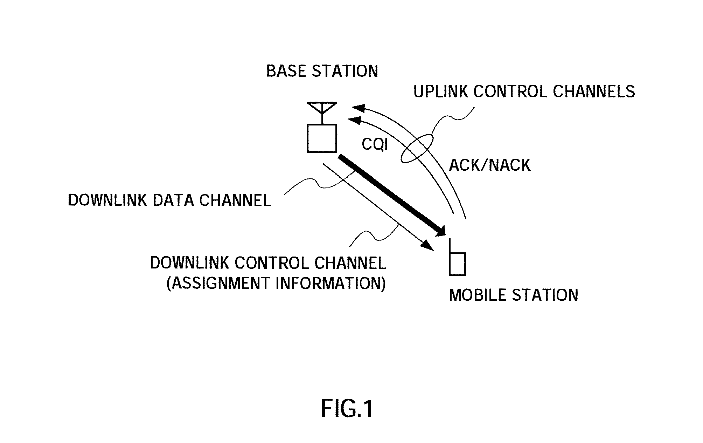

A high-speed packet transmission system will now be described. FIG.1 is a conceptual diagram of a high-speed packet transmission system. FIG.1 shows a case in which high-speed packet transmission is performed on a downlink. In this case, there is a downlink data channel as a channel for transmitting packet data using multicarrier transmission. This downlink data channel is shared by a plurality of mobile stations. Downlink control channels and uplink control channels associated with the downlink data channel are also provided to transmit control information necessary for packet data transmission on the downlink data channel. A downlink control channel transmits information indicating which mobile station's data channel is assigned to which subcarriers in above-described frequency scheduling (data channel assignment information), and MCS information for each mobile station. Also, each mobile station reports a CQI and ACK/NACK to the base station using an uplink control channel. An ARQ (Automatic Repeat reQuest) is performed using ACK (ACKnowledgment) / NAK (Negative ACKnowledgment). For both the downlink and uplink control channels in FIG.1, there are individual channels for each mobile station.

Generally, in this kind of high-speed packet transmission system, fading is counteracted by keeping transmission power fixed for a downlink data channel, and varying the transmission rate by changing the MCS adaptively according to the channel quality. On the other hand, a required reception quality is obtained for a downlink control channel and uplink control channel by maintaining a fixed transmission rate and varying the transmission power according to the channel quality.
Patent Document 1: Japanese Patent Application Laid-Open No.2002-252619

### Disclosure of Invention

### Problems to be Solved by the Invention

When the channel quality of an uplink control channel is poor due to fading or the like, if packet data transmission is performed to the mobile station that uses that uplink control channel, the uplink control channel transmission power for sending ACK/NACK corresponding to that packet data to the base station at the required reception quality becomes high. As a result, interference affecting adjacent cells increases, and uplink capacity is constrained.

On the other hand, when the channel quality of a downlink control channel is poor, if packet data transmission is performed to the mobile station that uses that downlink control channel, the downlink control channel transmission power for sending the above-described assignment information and MCS information to that mobile station at the required reception quality becomes high. As a result, interference affecting adjacent cells increases, and downlink capacity is constrained.

Also, in a communication system in which transmission power control is not performed for an uplink control channel, when the channel quality of an uplink control channel is poor due to fading or the like, if packet data transmission is performed to the mobile station that uses that uplink control channel, ACK/NACK corresponding to that packet data will not reach the base station at the required reception quality. The possibility of ACK/NACK not reaching the base station at the required reception quality is particularly high for a mobile station located near a cell boundary. As a result, packet data retransmission occurs and downlink data channel throughput falls.

It is an obj ect of the present invention to provide a base station apparatus, mobile station apparatus, and data channel scheduling method that enable interference in an adjacent cell and a reduction in channel capacity to be suppressed, and a drop in throughput to be prevented, in multicarrier transmission.

### Means for Solving the Problems

A scheduling method of the present invention is a data channel scheduling method for a plurality of subcarriers used in a multicarrier transmission system in which a multicarrier signal having the plurality of subcarriers in a frequency axis direction is transmitted continuously in a time axis direction, and performs time axis direction scheduling according to control channel quality, and performs frequency axis direction scheduling according to data channel quality.

### Advantageous Effect of the Invention

According to the present invention, interference in an adjacent cell and a reduction in channel capacity can be suppressed, and a drop in throughput can be prevented.

### Brief Description of Drawings

FIG. 1 is a conceptual diagram of a high-speed packet transmission system;
FIG.2 is a configuration diagram of a mobile communication system according to Embodiment 1 of the present invention;
FIG.3 is a block diagram showing the configuration of a base station apparatus according to Embodiment 1 of the present invention;
FIG.4 is a drawing showing a scheduling method according to Embodiment 1 of the present invention;
FIG.5 is a drawing showing the control channel and data channel arrangement according to Embodiment 1 of the present invention;
FIG. 6 is a drawing showing the relationship between channel quality fluctuation and scheduling according to Embodiment 1 of the present invention;
FIG.7 is a block diagram showing the configuration of a base station apparatus according to Embodiment 2 of the present invention; and
FIG.8 is a block diagram showing the configuration of a mobile station apparatus according to Embodiment 3 of the present invention.

### Best Mode for Carrying Out the Invention

Embodiments of the present invention will now be described in detail with reference to the accompanying drawings.

### (Embodiment 1)

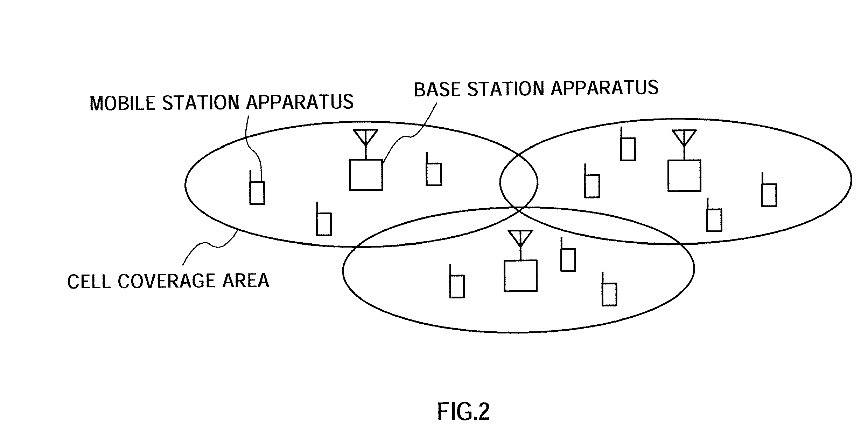

The configuration of a mobile communication system according to Embodiment 1 of the present invention is shown in FIG.2. As shown in this figure, a plurality of mobile stations are present within cells centered on a base station apparatus. In the example in FIG. 2, a mobile communication system composed of three cells is shown, but there is no particular limitation on the number of cells composing a mobile communication system.

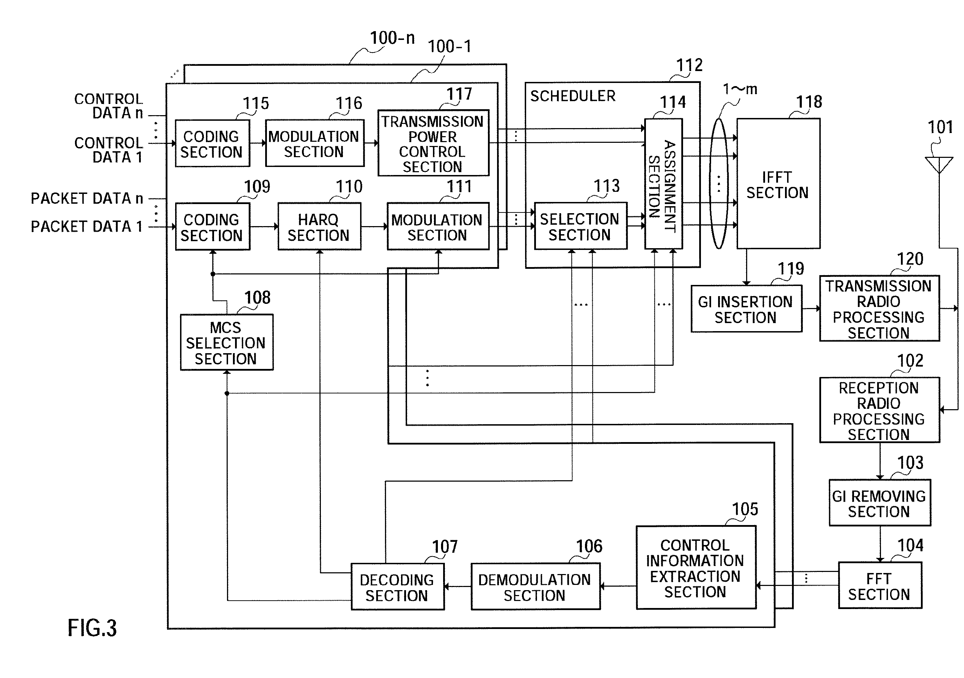

FIG. 3 is a block diagram showing the configuration of a base station apparatus according to Embodiment 1 of the present invention. A control information extraction section 105, demodulation section 106, decoding section 107, MCS selection section 108, coding section 109, HARQ (Hybrid Automatic Repeat Request) section 110, modulation section 111, coding section 115, modulation section 116, and transmission power control section 117 make up each of data processing sections 100-1 through 100-n. The number of data processing sections 100-1 through 100-n provided (n) corresponds to the number of mobile stations that can be accommodated by this base station apparatus, and each of data processing sections 100-1 through 100-n performs data processing for one mobile station.

A reception radio processing section 102 performs down-conversion of a received signal received by an antenna 101 from radio frequency to baseband frequency and so forth, and outputs the resulting signal to a guard interval (hereinafter referred to as "GI") removing section 103.

GI removing section 103 removes a GI from the received signal input from reception radio processing section 102, and outputs the resulting signal to a Fast Fourier Transform (hereinafter referred to as "FFT") section 104.

FFT section 104 converts the received signal input from GI removing section 103 from serial data format to parallel data format, then performs FFT processing, and outputs the resulting signal to control information extraction section 105 as a received signal of an individual mobile station.

Control information extraction section 105 extracts control information from the received signal input from FFT section 104, and outputs this to demodulation section 106. This control information is information sent from each mobile station on the uplink control channel of each mobile station, and includes ACK/NACK for HARQ, a CQI for each subcarrier, and downlink control channel quality information. With regard to ACK/NACK, each mobile station performs error detection on received packet data, and reports ACK to the base station when there is no error, or NACK when there is an error. With regard to the CQI for each subcarrier, each mobile station measures the reception CIR of each subcarrier as the channel quality of each downlink data channel subcarrier, and reports a CQI corresponding to that reception CIR to the base station for each subcarrier. With regard to the downlink control channel quality, each mobile station measures the reception CIR of its own downlink control channel as downlink control channel quality, and reports this to the base station.

Demodulation section 106 demodulates control information input from control information extraction section 105, and outputs the demodulated control information to decoding section 107.

Decoding section 107 decodes the control information input from demodulation section 106, then outputs a CQI of each subcarrier contained in the control information to MCS selection section 108 and an assignment section 114 of a scheduler 112. In addition, decoding section 107 outputs ACK or NACK contained in the control information to HARQ section 110. Furthermore, decoding section 107 outputs downlink control channel quality information contained in the control information to a selection section 113 of scheduler 112.

MCS selection section 108 selects the packet data modulation method (BPSK, QPSK, 8PSK, 16QAM, 64QAM, etc.) and coding rate according to the CQI input from decoding section 107. MCS selection section 108 has an MCS table showing the correspondence between CQIs, modulation methods, and coding rates, and selects the modulation method and coding rate on a subcarrier-by-subcarrier basis by referring to the MCS table using the per-subcarrier CQIs sent from the mobile station. MCS selection section 108 then outputs information indicating the selected modulation method to modulation section 111, and outputs information indicating the selected coding rate to coding section 109.

Coding section 109 codes input packet data using the coding rate selected by MCS selection section 108, and outputs the resulting data to HARQ section 110. Packet data 1 is a sequence of packet data addressed to mobile station 1 and packet data n is a sequence of packet data addressed to mobile station n, transmitted on a downlink data channel.

HARQ section 110 outputs packet data input from coding section 109 to modulation section 111, and also temporarily holds the packet data output to modulation section 111. Then, when NACK is input from decoding section 107, since retransmission is being requested by the mobile station, HARQ section 110 again outputs the temporarily held previously-output packet data to modulation section 111. On the other hand, when ACK is input from decoding section 107, HARQ section 110 outputs new packet data to modulation section 111.

Modulation section 111 modulates packet data input from HARQ section 110 in accordance with the modulation method selected by MCS selection section 108, and outputs the modulated packet data to selection section 113 of scheduler 112.

In accordance with the downlink control channel quality information input from decoding section 107, selection section 113 selects packet data to be output to assignment section 114 from among packet data 1 through n. The actual selection method will be described later herein.

Coding section 115 codes input control data using a predetermined coding rate, and outputs the coded control data to modulation section 116. Control data 1 is a sequence of control data addressed to mobile station 1 and control data n is a sequence of control data addressed to mobile station n, transmitted on a downlink control channel. This control data includes the above-described assignment information and per-mobile-station MCS information.

Modulation section 116 modulates control data input from coding section 115 in accordance with a predetermined modulation method, and outputs the modulated control data to transmission power control section 117.

Transmission power control section 117 controls the transmission power of the control data, and outputs the control data to assignment section 114 of scheduler 112. This transmission power control is performed according to the downlink control channel quality. That is to say, each mobile station measures the downlink control channel quality, creates a TPC command in accordance with the result of comparing that channel quality with a threshold value, and reports this to the base station, and the base station raises or lowers the control data transmission power in accordance with that TPC command.

Assignment section 114 assigns packet data input from selection section 113 and control data input from transmission power control section 117 to any of a plurality of subcarriers 1 through m composing a multicarrier signal in accordance with per-subcarrier CQIs input from decoding section 107, and outputs the data to an Inverse Fast Fourier Transform (hereinafter referred to as "IFFT") section 118. The actual assignment method will be described later herein.

IFFT section 118 performs IFFT processing on the packet data and control data input from assignment section 114 and creates a multicarrier signal (OFDM symbol), and outputs this multicarrier signal to a GI insertion section 119.

GI insertion section 119 inserts a GI in the multicarrier signal input from IFFT section 118, and outputs the resulting signal to a transmission radio processing section 120.

Transmission radio processing section 120 performs up-conversion of the multicarrier signal input from GI insertion section 119 from baseband frequency to radio frequency and so forth, and transmits the resulting signal from antenna 101.

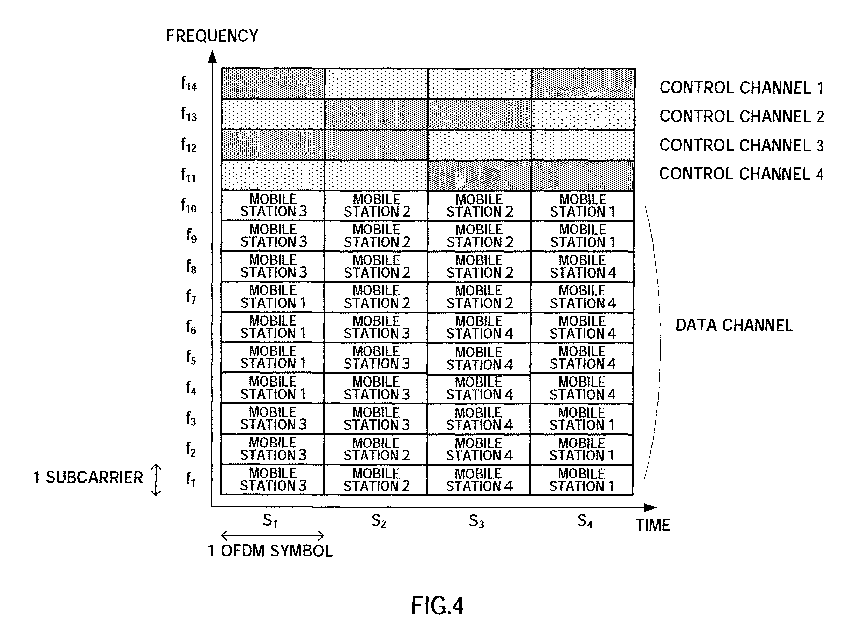

The operation of scheduler 112 comprising selection section 113 and assignment section 114 will now be described in detail using FIG. 4. FIG. 4 is a drawing showing a scheduling method according to Embodiment 1 of the present invention. As shown in FIG.4, in a multicarrier signal transmitted from a base station, OFDM symbols are composed of 14 subcarriers f₁ through f₁₄ in the frequency axis direction, and are transmitted sequentially in the time axis direction. Subcarriers f₁ through f₁₄ are differentiated as data and control channels. That is to say, subcarriers f₁ through f₁₀ are used by a downlink data channel, and subcarriers f₁₁ through f₁₄ are used by downlink control channels. Also, downlink control channels 1 through 4 are assigned respectively to mobile stations 1 through 4. That is to say, fixed assignment is performed of downlink control channel 1 subcarrier f₁₄, of downlink control channel 2 to subcarrier f₁₃, of downlink control channel 3 to subcarrier f₁₂, and of downlink control channel 4 to subcarrier f₁₁. On the other hand, the downlink data channel is shared by mobile stations 1 through 4, and subcarriers f₁ through f₁₀ are assigned variably to mobile stations 1 through 4.

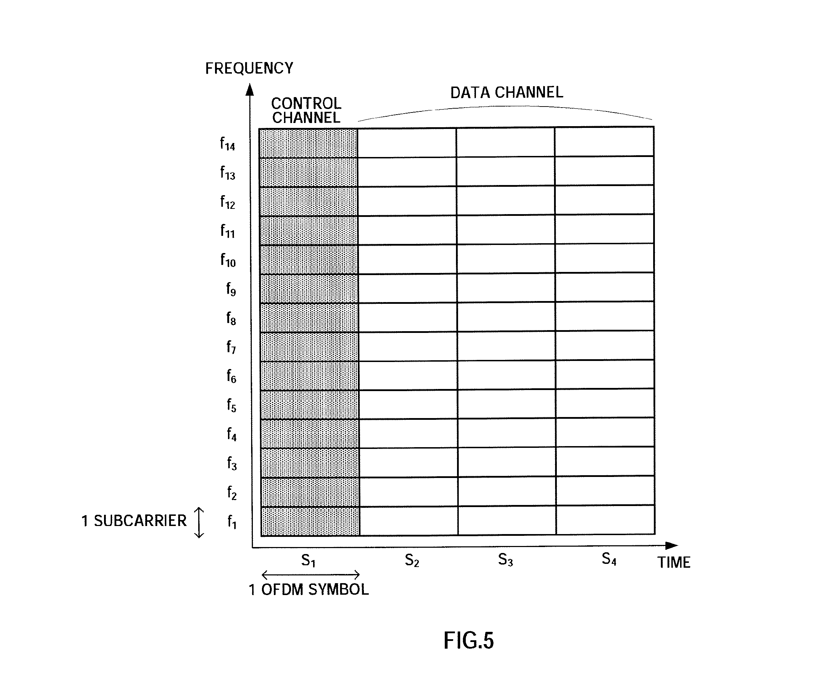

It is not necessary for the data channel and control channels to be respectively consecutive, and they may be assigned non-consecutively. Also, the control channels and data channel may be time-multiplexed as shown in FIG.5, for example.

First, the operation of selection section 113 will be described. Here, the number of mobile stations that can be multiplexed in one OFDM symbol is assumed to be 2. Selection section 113 compares the channel qualities of downlink control channels 1 through 4 reported from mobile stations 1 through 4. With regard to these channel qualities, mobile stations 1 through 4 measure the reception CIRs of downlink control channels 1 through 4, and report these CIR values to the base station as downlink control channel quality information. As the number of mobile stations that can be multiplexed is 2, selection section 113 selects the top two mobile stations in order of channel quality from among mobile stations 1 through 4. Here, it is assumed that control channels 1 and 3 have better channel quality than the other two control channels at the symbol S₁ timing, control channels 2 and 3 have better channel quality than the other two control channels at the symbol S₂ timing, control channels 2 and 4 have better channel quality than the other two control channels at the symbol S₃ timing, and control channels 1 and 4 have better channel quality than the other two control channels at the symbol S₄ timing. Therefore, selection section 113 makes the following selections as mobile stations for which the data channel is assigned to subcarriers f₁ through f₁₀: mobile stations 1 and 3 at the symbol S₁ timing, mobile stations 2 and 3 at the symbol S₂ timing, mobile stations 2 and 4 at the symbol S₃ timing, and mobile stations 1 and 4 at the symbol S₄ timing. That is to say, of packet data 1 through 4 input from modulation section 111, selection section 113 selects, and outputs to assignment section 114, packet data 1 and 3 at the symbol S₁ timing, packet data 2 and 3 at the symbol S₂ timing, packet data 2 and 4 at the symbol S₃ timing, and packet data 1 and 4 at the symbol S₄ timing.

As a different selection method, selection section 113 may select all mobile stations whose downlink control channel quality is of a predetermined quality or above, without regard to the number of mobile stations that can be multiplexed in 1 OFDM symbol.

Here, OFDM symbols S₁ through S₄ are transmitted sequentially in the time axis direction. Then selection of mobile stations to which a data channel is assigned is performed in accordance with control channel quality for each OFDM symbol along the time axis, as described above. That is to say, data channel time axis direction scheduling is performed by scheduler 112 in accordance with control channel quality.

Next, the operation of assignment section 114 will be described. First, assignment section 114 performs fixed assignment of control channel 1 (control data 1) to subcarrier f₁₄, of control channel 2 (control data 2) to subcarrier f₁₃, of control channel 3 (control data 3) to subcarrier f₁₂, and of control channel 4 (control data 4) to subcarrier f₁₁, at the symbol S₁ through S₄ timings. That is to say, with regard to control channels, assignment section 114 assigns control channels to subcarriers f₁₁ through f₁₄ determined beforehand from among subcarriers f₁ through f₁₄.

On the other hand, assignment section 114 varies the mobile stations to which the data channel is assigned for each of subcarriers f₁ through f₁₀ at the symbol S₁ through S₄ timings. In other words, at the symbol S₁ timing, since mobile stations 1 and 3 have been selected by selection section 113, assignment section 114 considers mobile stations 1 and 3, and compares the mobile station 1 downlink data channel quality with the mobile station 3 downlink data channel quality for each of subcarriers f₁ through f₁₀. That is to say, assignment section 114 compares the CQIs reported from mobile station 1 with the CQIs reported from mobile station 3 at the symbol S₁ timing. As a CQI value is normally higher the better the channel quality, assignment section 114 selects whichever of mobile station 1 or mobile station 3 has the higher CQI value on a subcarrier-by-subcarrier basis, and assigns packet data of the selected mobile station to a subcarrier. In other words, of the mobile stations selected by selection section 113, assignment section 114 assigns the data channel to the mobile station with the best downlink data channel quality on a subcarrier-by-subcarrier basis. In the example in FIG.4, at the symbol S₁ timing, for subcarrier f₁ the CQI of mobile station 3 is greater than the CQI of mobile station 1, and therefore mobile station 3 is assigned to subcarrier f₁. Repeating assignment to each subcarrier in a similar way, a mobile station 1 data channel is assigned to subcarriers f₄, f₅, f₆, and f₇, and a mobile station 3 data channel is assigned to subcarriers f₁, f₂, f₃, f₈, f₉, and f₁₀.

Similarly, at the symbol S₂ timing, a mobile station 2 data channel is assigned by assignment section 114 to subcarriers f₁, f₂, f₇, f₈, f₉, and f₁₀, and a mobile station 3 data channel is assigned to subcarriers f₃, f₄, f₅, and f₆; at the symbol S₃ timing, a mobile station 2 data channel is assigned to subcarriers f₇, f₈, f₉, and f₁₀, and a mobile station 4 data channel is assigned to subcarriers f₁, f₂, f₃, f₄, f₅, and f₆; and at the symbol S₄ timing, a mobile station 1 data channel is assigned to subcarriers f₁, f₂, f₃, f₉, and f₁₀, and a mobile station 4 data channel is assigned to subcarriers f₄, f₅, f₆, f₇, and f₈.

Here, assignment section 114 assigns the data channel of each mobile station to subcarriers along the frequency axis in accordance with data channel quality, as described above. That is to say, data channel frequency axis direction scheduling is performed by scheduler 112 in accordance with data channel quality.

In the above description, downlink control channels of each mobile station are assigned to mutually different subcarriers (f₁₁ through f₁₄), but a particular subcarrier (for example, f₁₄) may be shared by a plurality of mobile stations as a control channel, with control information being transmitted only to a mobile station to which a data channel is assigned. In this case, amobile station measures a common pilot reception CIR as control channel quality, and reports this to the base station.

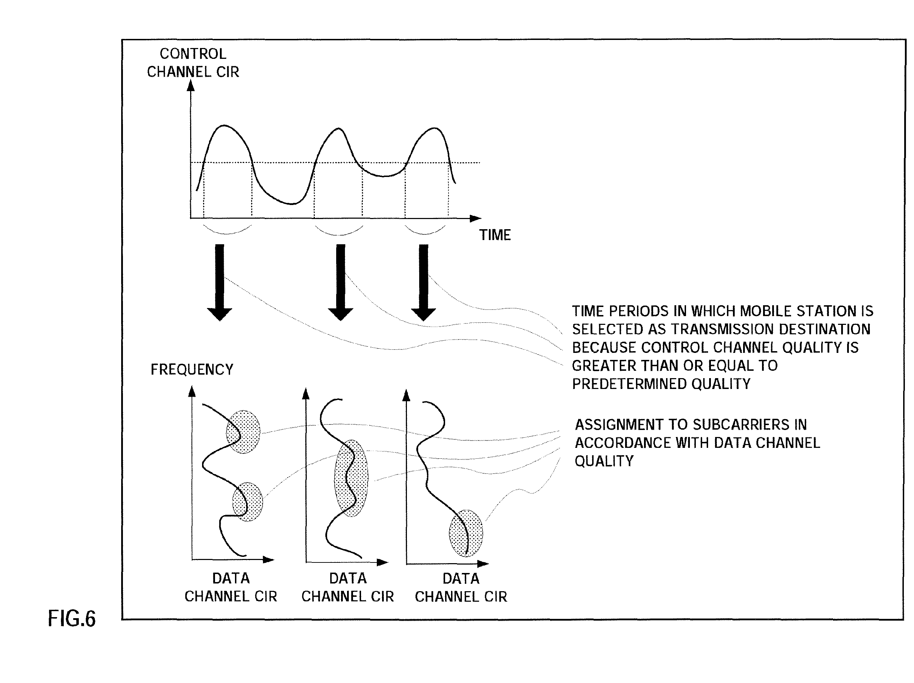

The way in which the above-described scheduling works will now be illustrated, focusing on a particular mobile station. FIG.6 is a drawing showing the relationship between channel quality fluctuation and scheduling according to Embodiment 1 of the present invention. The upper part of FIG. 6 shows fluctuation over time of control channel quality (the reception CIR of a mobile station). As shown in the upper part of FIG.6, this mobile station is selected as a packet data transmission destination only in time periods in which its control channel quality is good. That is to say, it is selected as a mobile station for which data channel assignment is performed. The lower part of FIG.6 shows fluctuation over frequency of data channel quality (the reception CIR of the mobile station) in the respective time periods (symbols) in which the mobile station is selected as a transmission destination mobile station. The round shaded areas indicate locations selected as transmission frequencies (subcarriers) to which the data channel is assigned, with frequencies at which channel quality is good being selected.

Thus, according to this embodiment, the data channel is assigned only to mobile stations with good downlink control channel quality, and the data channel is not assigned to mobile stations with poor downlink control channel quality, making it possible to prevent the transmission power of downlink control channels for sending above-described assignment information and MCS information from becoming high, and enabling interference in adjacent cells to be suppressed. As a result, a reduction in downlink capacity can be suppressed. Also, data channel throughput can be improved by increasing the transmission rate through the use of a modulation method with a high modulation level.

When the base station shown in FIG.3 is used in a communication system in which transmission power control is not performed for control channels, transmission power control section 117 is not necessary in the configuration in FIG. 3. Also, a configuration may be used in which transmission power control section 117 is provided after assignment section 114, and transmission power control is performed after assignment to subcarriers.

### (Embodiment 2)

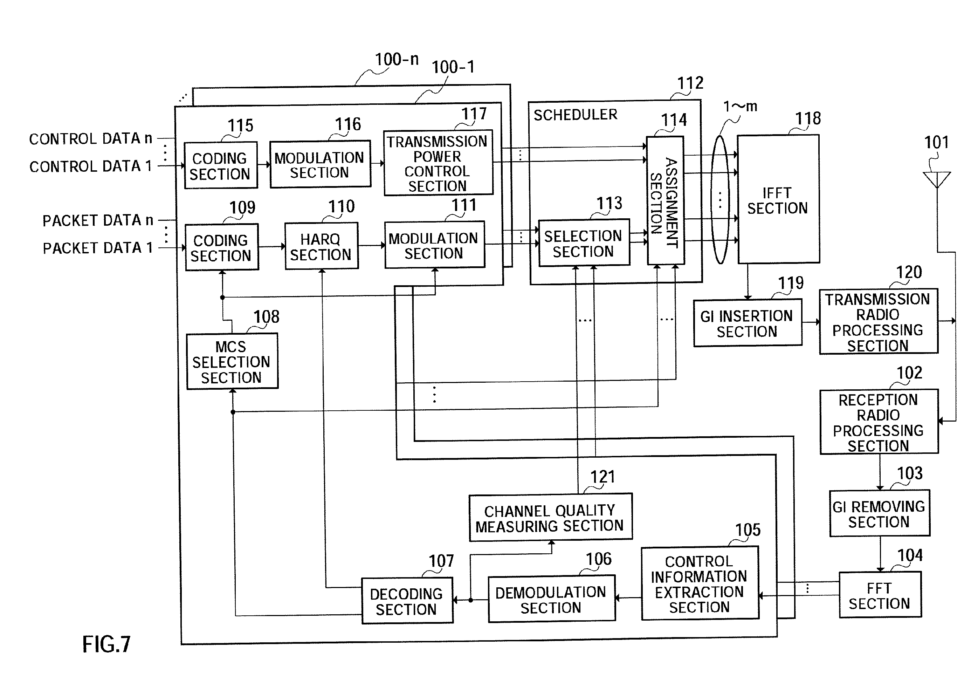

FIG.7 is a block diagram showing the configuration of a base station apparatus according to Embodiment 2 of the present invention. Parts in FIG.7 identical to those in FIG.3 (Embodiment 1) are assigned the same codes as in FIG.3, and descriptions thereof are omitted.

In FIG.7, demodulation section 106 demodulates control information input from control information extraction section 105, and outputs the demodulated control information to decoding section 107 and a channel quality measuring section 121. As explained above, this control information is transmitted from each mobile station on an uplink control channel of eachmobile station. Channel quality measuring section 121 measures a reception CIR of control information input from demodulation section 106 as the uplink control channel quality of the corresponding mobile station, and outputs this to selection section 113. In the same way as in Embodiment 1, selection section 113 selects packet data to be output to assignment section 114 from among packet data 1 through n in accordance with the uplink control channel quality information (reception CIRs) input from channel quality measuring section 121.

Decoding section 107 decodes the control information input from demodulation section 106, then outputs a CQI of each subcarrier contained in the control information to MCS selection section 108 and assignment section 114. In addition, decoding section 107 outputs ACK or NACK contained in the control information to HARQ section 110.

Thus, according to this embodiment, the data channel is assigned only to mobile stations with good uplink control channel quality, and the data channel is not assigned to mobile stations with poor uplink control channel quality, making it possible to prevent the transmission power of uplink control channels for sending ACK/NACK and CQIs to a base station from becoming high, and enabling interference in adjacent cells to be suppressed. As a result, a reduction in uplink capacity can be suppressed. Also, since the data channel is not assigned to mobile stations with poor uplink control channel quality, the possibility of ACK/NACK not reaching a base station at the required reception quality can be reduced even in a communication system in which transmission power control is not performed for uplink control channels. As a result, a drop in downlink data channel throughput due to the occurrence of retransmissions can be suppressed.

### (Embodiment 3)

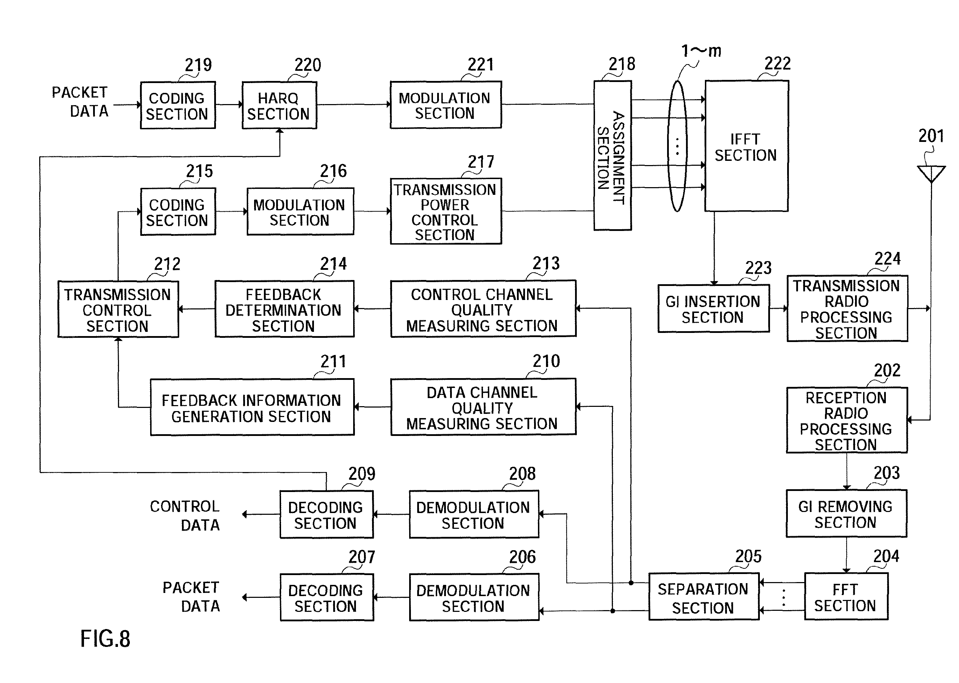

FIG.8 is a block diagram showing the configuration of a mobile station apparatus according to Embodiment 3 of the present invention.

In FIG.8, a reception radio processing section 202 performs down-conversion of a received signal received by an antenna 201 from radio frequency to baseband frequency and so forth, and outputs the resulting signal to a GI removing section 203.

GI removing section 203 removes a GI from the received signal input from reception radio processing section 202, and outputs the resulting signal to an FFT section 204.

FFT section 204 converts the received signal input from GI removing section 203 from serial data format to parallel data format, then performs FFT processing, and outputs the resulting signals to a separation section 205 as signals of each subcarrier.

Separation section 205 separates signals input from FFT section 204 into a data channel signal and control channel signal, outputs the data channel signal to a demodulation section 206 and a data channel quality measuring section 210, and outputs the control channel signal to a demodulation section 208 and a control channel quality measuring section 213.

Demodulation section 206 demodulates the data channel signal, and a decoding section 207 decodes the demodulated data channel signal. By this means, packet data is obtained.

Demodulation section 208 demodulates the control channel signal, and a decoding section 209 decodes the demodulated control channel signal. By this means, control data is obtained. Decoding section 209 also outputs ACK or NACK contained in the control data to a HARQ section 220. With regard to ACK/NACK, the base station performs error detection on received packet data, and reports ACK to the mobile station when there is no error, or NACK when there is an error.

Data channel quality measuring section 210 measures the data channel signal reception quality (for example, the reception CIR), and outputs this to a feedback information generation section 211.

Feedback information generation section 211 generates a CQI (Channel Quality Indicator), which is channel quality information, from the data channel signal reception quality as feedback information, and outputs this to a transmission control section 212.

Control channel quality measuring section 213 measures the control channel signal reception quality (for example, the reception CIR), and outputs this to a feedback determination section 214.

Feedback determination section 214 compares the control channel signal reception quality with a predetermined threshold value, and determines that CQI feedback is to be performed when the reception quality is greater than or equal to the threshold value, or determines that CQI feedback is not to be performed when the reception quality is less than the threshold value. The result of this determination is output to transmission control section 212.

If the determination result is that feedback is to be performed, transmission control section 212 outputs the CQI to a coding section 215. If the determination result is that feedback is not to be performed, transmission control section 212 does not output anything.

If a CQI is input from transmission control section 212, coding section 215 codes that CQI and outputs it to a modulation section 216. If there is no input from transmission control section 212, coding section 215 does not perform any processing.

Modulation section 216 modulates a CQI input from coding section 215 in accordance with a predetermined modulation method, and outputs the result to a transmission power control section 217.

Transmission power control section 217 controls the transmission power of the CQI, and outputs it to an assignment section 218. This transmission power control is performed according to uplink control channel quality. That is to say, the base station measures the uplink control channel quality, creates a TPC command in accordance with the result of comparing that channel quality with a threshold value, and reports this to the mobile station, and the mobile station raises or lowers the CQI transmission power in accordance with that TPC command.

A coding section 219 codes input packet data, and outputs the coded packet data to HARQ section 220.

HARQ section 220 outputs packet data input from coding section 219 to a modulation section 221, and also temporarily holds the packet data output to modulation section 221. Then, when NACK is input from decoding section 209, since retransmission is being requested by the base station, HARQ section 220 again outputs the temporarily held previously-output packet data to modulation section 221. On the other hand, when ACK is input from decoding section 209, HARQ section 220 outputs new packet data to modulation section 221.

Modulation section 221 modulates packet data input from HARQ section 220 in accordance with a predetermined modulation method, and outputs the modulated packet data to assignment section 218.

Assignment section 218 assigns packet data input from modulation section 221 and the CQI input from transmission power control section 217 to any of a plurality of subcarriers 1 through m composing a multicarrier signal, and outputs these to an IFFT section 222.

IFFT section 222 performs IFFT processing on the packet data and CQI input from assignment section 218 and creates a multicarrier signal (OFDM symbol), and outputs this multicarrier signal to a GI insertion section 223.

GI insertion section 223 inserts a GI in the multicarrier signal input from IFFT section 222, and outputs the resulting signal to a transmission radio processing section 224.

Transmission radio processing section 224 performs up-conversion of the multicarrier signal input from GI insertion section 223 from baseband frequency to radio frequency and so forth, and transmits the resulting signal from antenna 201.

If a mobile station according to this embodiment does not feed back a CQI, the base station performs processing for that mobile station regarding the CQI used by above-described scheduler 112 as a minimum-value CQI, or excludes it from processing by above-described scheduler 112.

Thus, according to this embodiment, a mobile station determines whether or not to perform data channel CQI feedback to the base station according to control channel quality. That is to say, data channel reception quality information is transmitted to the base station when the control channel quality is greater than or equal to a threshold value, and data channel reception quality information is not transmitted to the base station when the control channel quality is less than a threshold value. Thus, in this embodiment, unnecessary CQI feedback is not performed, enabling the amount of uplink transmission to be reduced. By this means, interference in adjacent cells can be suppressed, as a result of which uplink capacity can be increased. Also, a mobile station with poor control channel quality can be excluded from processing in a base station, enabling the amount of processing by the base station to be reduced. As the possibility of packet data addressed to a mobile station with poor control channel quality not being assigned in a base station is high, packet data throughput is not lowered.

In the above embodiments, data channel scheduling is performed by means of the so-called Max-C/I method, but data channel scheduling may also be performed by means of the so-called PF (Proportional Fairness) method. The Max-C/I method is a scheduling algorithm based only on instantaneous channel quality, suited more to maximizing downlink data channel throughput than to achieving fairness among mobile stations. The PF method, on the other hand, is a scheduling algorithm in accordance with the ratio of the average channel quality of a long section or average channel quality of all subcarriers included in one OFDM to instantaneous channel quality, enabling a good balance to be maintained between fairness among mobile stations and downlink data channel throughput.

In the above embodiments, channel quality measurement can be performed using the reception SNR, reception SIR, reception SINR, reception CINR, received power, interference power, bit error rate, throughput, an MCS that enables a predetermined error rate to be achieved, and so forth.

Channel quality information may be expressed as a CQI, CSI (Channel State Information), or the like.

Feedback information from a mobile station to a base station need not be only channel quality information, but may also be ACK/NACK or other information.

A data channel in the above embodiments may be, for example, in the 3GPP standard, an HS-DSCH, DSCH, DPDCH, DCH, S-CCPCH, FACH, or the like.

Control channels in the above embodiments include, for example, in the 3GPP standard, HS-SSCH and HS-DPCCH, which are channels associated with HS-DSCH, DCCH for reporting control information for RRM (Radio Resource Management), DPCCH for S-CCPCH, P-CCPCH, PCH, and BCH physical channel control, and so forth.

In the above embodiments, a base station may be indicated by "Node B," a mobile station by "UE," and a subcarrier by "Tone."

The function blocks used in the descriptions of the above embodiments are typically implemented as LSIs, which are integrated circuits. These may be implemented individually as single chips, or a single chip may incorporate some or all of them.

Here, the term LSI has been used, but the terms IC, system LSI, super LSI, and ultra LSI may also be used according to differences in the degree of integration.

The method of implementing integrated circuitry is not limited to LSI, and implementation by means of dedicated circuitry or a general-purpose processor may also be used. An FPGA (Field Programmable Gate Array) for which programming is possible after LSI fabrication, or a reconfigurable processor allowing reconfiguration of circuit cell connections and settings within an LSI, may also be used.

In the event of the introduction of an integrated circuit implementation technology whereby LSI is replaced by a different technology as an advance in, or derivation from, semiconductor technology, integration of the function blocks may of course be performed using that technology. The adaptation of biotechnology or the like is also a possibility.

The present application is based on Japanese Patent Application No.2004-099320 filed on March 30, 2004, entire content of which is expressly incorporated herein by reference.

### Industrial Applicability

A base station apparatus and data channel scheduling method according to the present invention are particularly useful in, for example, a high-speed packet transmission system using OFDM or MC-CDMA, or the like.

## Claims

1. A base station apparatus that transmits a multicarrier signal composed of a plurality of subcarriers, comprising:
a selection section that selects a mobile station for which a data channel is assigned to the plurality of subcarriers in accordance with channel quality of a control channel for transmitting control information necessary for data transmission on a data channel; and
an assignment section that assigns the data channel to the plurality of subcarriers in accordance with channel quality of the data channel, with amobile station selected by the selection section as an object.

2. The base station apparatus according to claim 1, wherein the selection section selects mobile stations up to a possible number of multiplexing in the plurality of subcarriers in high-to-low order of the channel quality of the control channel.

3. The base station apparatus according to claim 1, wherein the selection section selects the mobile station for which the channel quality of the control channel is greater than or equal to a predetermined quality.

4. The base station apparatus according to claim 1, wherein the selection section selects the mobile station for which the data channel is assigned to the plurality of subcarriers, in accordance with channel quality of a downlink control channel for transmitting data channel assignment information or MCS information.

5. The base station apparatus according to claim 1, wherein the selection section selects the mobile station for which the data channel is assigned to the plurality of subcarriers, in accordance with channel quality of an uplink control channel for transmitting ACK or NACK.

6. The base station apparatus according to claim 1, wherein the assignment section assigns the control channel to a predetermined subcarrier among the plurality of subcarriers.

7. Amobile communication system in which a base station apparatus and a mobile station apparatus perform radio communication, wherein:
the base station apparatus receives channel quality information of a data channel from the mobile station apparatus; and
the mobile station apparatus determines whether or not to transmit the channel quality information to the base station apparatus, in accordance with channel quality of a control channel.

8. The mobile communication system according to claim 7, wherein the mobile station apparatus determines that the channel quality information is to be transmitted when channel quality of the control channel is greater than or equal to a threshold value, and determines that the channel quality information is not to be transmitted when channel quality of the control channel is less than a threshold value.

9. The mobile communication system according to claim 7, wherein the mobile station apparatus measures channel quality using a reception SIR of the control channel.

10. The mobile communication system according to claim 7, wherein the mobile station apparatus measures channel quality using required transmission power of the control channel.

11. A scheduling method of a data channel for a plurality of subcarriers used in a multicarrier transmission system in which a multicarrier signal having the plurality of subcarriers in a frequency axis direction is transmitted continuously in a time axis direction, wherein time axis direction scheduling is performed according to channel quality of a control channel, and frequency axis direction scheduling is performed according to channel quality of a data channel.
